# NEW EUROPEAN PATENT SPECIFICATION

(11) **EP 0 201 129 B2**
(45) Date of publication and mention of the opposition decision: **03.05.1995**
(45) Mention of the grant of the patent: 16.10.1991
(21) Application number: 86200731.7
(22) Date of filing: 29.04.1986
(51) Int. Cl.: H02K 13/04, H01R 39/32, H01R 4/02

(54) **Method of manufacturing an electrical machine part**
Methode zur Herstellung eines Teils einer elektrischen Maschine
Méthode pour fabriquer une pièce de machine électrique

(30) Priority: 03.05.1985 NL 8501258
(43) Date of publication of application: 17.12.1986
(73) Proprietor: Philips Electronics N.V., 5621 BA Eindhoven (NL)
(72) Inventor: Dijkstra, Arend, NL-5656 AA Eindhoven (NL); Haykens, Bernardus, NL-5656 AA Eindhoven (NL); Veenstra, Mient, NL-5656 AA Eindhoven (NL)
(74) Representative: Rolfes, Johannes Gerardus Albertus

(56) References cited:
- DE-A- 1 956 669
- DE-A- 3 044 663
- DE-C- 2 301 094
- FR-A- 768 194
- GB-A- 2 137 913
- US-A- 3 274 331
- US-A- 3 665 367
- "Löten in der Elektrotechnik und Elektronik" Verlag Markt & Technik, 1982, pages 40-45
- "Soldering in Electronics" Electrochemical publications limited 1984, page 362

## Description

The invention relates to a method as defined in the preamble of claim 1

A method of this kind is known from DE-A-30 44 663. According to the known method coil ends are wound round rectangular metal pins of a commutator, whereupon the coil ends are connected to the pins with the aid of a soldering bath.

The fixing by means of soldering of two parts possessing different properties and different dimensions, such as said coil ends and said pins can cause problems, such as bad joints or wire fractures.

An object of the invention is to provide a practical solution to these problems.

The method according to the invention is characterized by the features of claim 1.

As soft-solder layer a layer of a lead-tin compound is preferably applied. A laser can be used to apply heat to the soft-solder layer.

It is to be noted, that the use of a laser to heat a solder material is disclosed in US-A-3,665,367.

The invention further relates to a rotor obtained by the method according to the invention, wherein the connection element is strip-shaped and is of at least substantially rectangular cross-section. The rotor according to the invention is characterized by the features of claim 4.

It is to be noted that it is known per se from DE 2301094 to apply a solder material around a connection pin before wrapping a coil end around the pin.

An electrical machine known for example from DE-A-30 44 663 or DE-A-26 13 194. The connection elements of the known machine, which elements serve for the electrical connection of the coil with other components of the machine, often have a larger cross-section and are made of a material having greater strength than the coil wire, which is thin relative to the connection elements. Because of this the fixing of the ends of the coil wire to the connection elements can give rise to problems, which is disadvantageous for example in automation of the process.

It is to be noted, that in FR-A-768.194 an electric machine is disclosed, which is provided with coil ends soldered to hook-shaped parts of a collector. There is no disclosure about the kind of solder connection and the method of connection.

It is to be noted further, that a thin solder layer is known per se from GB-A-2 137 913 and is applied into an electrical connector for terminating and splicing high voltage power cables. That connector comprises a metallic tubular sleeve with an open end for receiving an electrical conductor. The inner wall of the sleeve is pretinned with an internal coating of solder having a thickness of a few thousands of an inch. After connection a cylindrical layer of solder is present in the cylindrical space bounded by said wall of the sleeve and the outer wall of the electrical conductor.

Particular forms of embodiment are given in the claims.

The invention will hereinafter be elucidated with a description of an example of an embodiment represented in the figures.

Figure 1 shows a plan view of an electric motor.

Figure 2 shows a cross-section through the line II-II in Fgure 1.

Figure 3 shows a perspective view of a part of the embodiment in Figures 1 and 2.

Figure 4 shows an enlarged cross-section of a soldered connection as applied in the electric motor of Figures 1, 2 and 3.

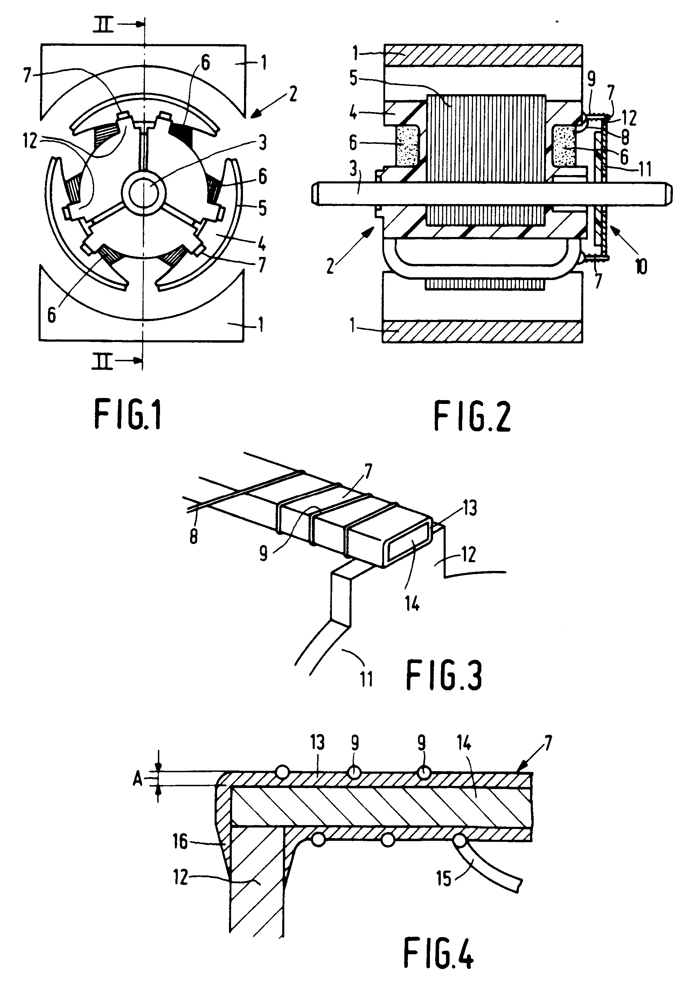

As an example of an electric machine in which a rotor according to the invention is applied, Figures 1 and 2 show schematically an electric motor with a stator 1 and a rotor 2. Mounted on the shaft 3 of the rotor 2 is an insulating member 4 with a laminated core 5 and coils 6. The insulation member 4 is provided with axially directed connection elements 7 to which the ends 9 of the coil wire 8 are fixed. Likewise mounted on the shaft 3 is a collector 10 with contact elements 11, which contact elements are provided with lugs 12 that are in connection with the connection elements.7.

Figures 3 and 4 give in detail and on a larger scale than in Figures 1 and 2 the connection of the ends 9 of the coil wire 8 with the connection elements 7 and the lugs 12. The connection element 7 is implemented as a metal strip of rectangular cross-section, which is a simple shape to manufacture and possesses a good plane surface for the lug 12.

Since the connection element has to link up with other parts of the electric machine, as for example the said lug 12 of the collector 10 and is required to be resistant to mechanical loads, a connection element 7 will often be made of a material having a greater strength and a substantially larger cross-section than the coil wire 8. The mechanical load may be very considerable in particular when the connection elements 7 are mounted on a rotor as shown in the illustrated embodiment and are subject during operation of the machine to centrifugal forces. The fixing together of two parts possessing different strengths and different dimensions, such as the coil wire 8 and a connection element 7, can in general cause problems. In particular if the parts are fixed together by soldering or welding, there is a considerable risk of a bad joint or of wire fracture owing among other things to the great difference in the heat capacity of the parts.

It has been found that a practical solution to these problems is to provide the connection element with a soft-solder layer of at least approximately 30» thick. This soft-solder layer 13, preferably of a lead-tin compound, surrounds like a sleeve the metal core 14 of rectangular cross-section, made for example of phosphor bronze. The usual thickness of a soft-solder layer for a soldered joint lies in the region of 5-10». Due to the relatively large thickness A (Figure 4) of the soft-solder layer, being at least approximately 30», the edges of the connection element 7 are rounded. This prevents damage to the end 9 of a coil wire 8 through contact with a sharp edge of the connection element 7 when the ends of a few turns of wire are wound around the connection element.

During the soldering of the end 9 to the connection element 7 the windings of the end will sag into the soft-solder layer. The part 15 of the coil wire between a coil 6 and a connection element 7, which was originally tightly tensioned, will consequently loose its tension and possibly even hang somewhat loose. This avoids the risk of this part of the wire being under too great tension, which could even give rise to wire fracture.

The fact that the windings around the end 9 at least partly sag into the thick soft-solder layer guarantees good electrical and thermal conductivity between the end 9 and the soft-solder layer 13. In this way, too, better protection is provided against mechanical damage.

The fixing of the end 9 of the coil wire 8 to a connection element 7 and of the connection element to the lug 12 of the collector 10 can be performed in a single soldering operation whereby a part16 of the soft-solder layer 13 flows out over the lug 12.

The construction in accordance with the invention lends itself particularly well for a soldering process using a laser, since in this way a really accurately directed and dosed quantity of heat can be supplied to the parts to be connected.

It has been found that even wire of very small diameter, for example 25», can be fixed without problems to a connection element as described above. Electric machines with widely different supply voltages for the coils and in which there are therefore considerable differences in the diameters of the coil wire, can now all be provided with the same connection elements, thereby cutting production costs.

The embodiment described in the foregoing is eminently suitable for an automated manufacturing process in which the winding of the coil, the winding of the ends of the coil wire around the connection elements and the soldering can be completely carried out by machines, since no exaggerated requirements need be imposed on the accuracy with which the turns of the end of the coil wire should be wound around the connection elements, the connections can be made in a single soldering process and the percentage of rejects is small.

## Claims

1. A method of manufacturing a rotor of an electrical machine, which rotor is provided with
- an insulation member (4) having a connection element (7) with a metal core (14),
- a coil (6) having a coil wire (8) with a coil end (9) and
- a collector (10) having a contact element,
in which method
- the coil end (9) is wrapped around the connection element (7) and electrically connected to the metal core (14) by soldering and
- the connection element (7) is connected to the collector (10),
characterized by the following steps:
- to apply a soft-solder material around the metal core (14) for forming a soft-solder layer (13) of at least substantially 30 microns thickness,
- to wrap the coil end around the metal core (14) provided with the soft-solder layer (13) of at least 30 microns thickness,
- to use as contact element a contact element (11) having a lug (12) for connection with the connection element (7), and
- to perform a single soldering operation in which both the soft-solder layer (13) melts, the wrapped coil end (9) at least partly sinking into said layer (13), and a portion of the soft-solder layer (13) flows out over the lug (12) of the contact element (11) to perform after cooling the fixing of both the coil end (9) to the connection element (7) and the lug (12) to the connection element (7).

2. A method as claimed in Claim 1, characterized in that a laser is used in the single soldering operation to supply heat to the parts to be connected.

3. A method as claimed in Claim 1 or 2, characterized in that as soft-solder layer (13) a layer of a lead-tin compound is applied.

4. A rotor obtained by the method as claimed in Claim 1, 2 or 3, wherein the connection element (7) is strip-shaped and is of at least substantially rectangular cross-section, characterized in that the connection element (7) possesses a plane surface for the lug (12) of the contact element (11), the soft-solder layer (13) having a portion (16) spread onto the contact element (11).

## Patentansprüche

1. Verfahren zum Herstellen eines Läufers einer elektrischen Maschine, wobei dieser Läufer mit den nachfolgenden Elementen versehen ist:
- einem Isolierungselement (4) mit einem Verbindungselement (7) mit einem Metallkern (14),
- einer Spule (6) mit einem Spulendraht (8) mit einem Spulenende (9) und
- einem Kollektor (10) mit einem Kontaktelement,
wobei bei diesem Verfahren:
- das Spulenende (9) um das Verbindungselement (7) gewickelt wird und mit dem Metallkern (14) in einem Lötverfahren verbunden wird und
- das Verbindungselement (7) mit dem Kollektor (10) verbunden wird,
gekennzeichnet durch die nachfolgenden Verfahrensschritte:
- das Anbringen von Weichlotmaterial um den Metallkern (14) zur Bildung einer Weichlotschicht (13) mit einer Dicke von wenigstens im wesentlichen 30 »m,
- das Wickeln des Spulenendes um den Metallkern (14) mit der Weichlotschicht (13) mit einer Dicke von wenigstens 30 »m,
- das Verwenden eines Kontaktelementes (11) mit einer Öse (12) als Kontaktelement zur Verbindung mit dem Verbindungselement (7), und
- das Durchführen eines einzigen Lötvorgangs, bei dem die Weichlotschicht (13) schmilzt, wobei das umschlungene Spulenende (9) wenigstens teilweise in die genannte Schicht (13) sinkt, und wobei ein Teil der Weichlotschicht (13) über die Öse (12) des Kontaktelementes (11) fließt um nach Abkühlung die Befestigung des Spulenendes (10) mit dem Verbindungselement (7) und der Öse (12) mit dem Verbindungselement (7) zu bilden.

2. Verfahren nach Anspruch 1, dadurch gekennzeichnet, daß bei dem einzigen Lötvorgang zum Zuführen von Hitze zu den mit einander zu verbindenden Teilen ein Laser verwendet wird.

3. Verfahren nach Anspruch 1 oder 2, dadurch gekennzeichnet, daß als Weichlotschicht (13) eine Schicht aus einer Blei-Zinn-Verbindung angebracht wird.

4. Läufer, erhalten nach dem Verfahren nach Anspruch 1, 2 oder 3, wobei das Verbindungselement (7) streifenförmig ist und einen wenigstens im wesentlichen rechteckigen Querschnitt hat, dadurch gekennzeichnet, daß das Verbindungselement (7) eine ebene Oberfläche hat für die Öse (12) des Kontaktelementes (11), wobei die Weichlotschicht (13) einen Teil (16) aufweist, der über das Kontaktelement (12) verbreitet ist.

## Revendications

1. Procédé de fabrication d'un rotor d'une machine électrique, ledit rotor comportant
- un élément d'isolation (4) présentant un élément de connexion (7) muni d'un noyau métallique (14),
- une bobine (6) présentant un fil de bobine (8) et une extrémité de bobine (9) et
- un collecteur (10) présentant un élément de contact,
procédé suivant lequel
- l'extrémité de bobine (9) est bouclée sur l'élément de connexion (7) pour être reliée électriquement par soudage au noyau métallique (14), et
- l'élément de connexion (7) est relié au collecteur (10),
caractérisé par les étapes suivantes :
- de déposer un matériau de soudage doux autour du noyau métallique (14) pour la formation d'une couche de soudure tendre présentant une épaisseur qui au moins est sensiblement égale à 30 microns,
- de boucler l'extrémité de bobine sur le noyau métallique (14) muni de la couche de soudure tendre (13) présentant une épaisseur d'au moins égale à 30 microns,
- d'utiliser comme élément de contact un élément de contact (11) présentant une patte (12) pour être reliée à l'élément de connexion (7) et
- d'effectuer une seule opération de soudage pendant laquelle la couche de soudure tendre (13) est fondue ce qui provoque que l'extrémité de bobine bouclée (9) s'enfonce au moins partiellement dans ladite couche (13) aussi bien qu'une partie de la couche de soudure tendre (13) se répand sur la patte (12) de l'élément de contact (11) pour réaliser après refroidissement la fixation de l'extrémité de bobine (9) à l'élément de connexion (7) aussi bien que la fixation de la patte (12) à l'élément de connexion (7).

2. Procédé selon la revendication 1, caractérisé en ce que dans la seule opération de soudage on utilise un laser pour apporter de la chaleur aux parties à connecter.

3. Procédé selon la revendication 1 ou 2, caractérisé en ce que, comme couche de soudure tendre (13), est déposée une couche constituée d'un composé de plomb et d'étain.

4. Rotor obtenu par la mise en oeuvre du procédé selon la revendication 1, 2 ou 3, suivant lequel l'élément de connexion (7) est en forme de bande et présente une coupe transversale au mois sensiblement rectangulaire, caractérisé en ce que l'élément de connexion (7) présente une surface plane pour la patte (12) de l'élément de contact (11), la couche de soudure tendre (13) présentant une partie (16) répandue sur l'élément de contact (11).
